# EUROPÄISCHE PATENTSCHRIFT

(11) **EP 1 793 199 B1**
(45) Veröffentlichungstag und Bekanntmachung des Hinweises auf die Patenterteilung: **26.10.2011**
(21) Anmeldenummer: 06022898.8
(22) Anmeldetag: 03.11.2006
(51) Int. Cl.: G01C 9/26, H02G 1/00

(54) **Vorrichtung zum Ausrichten von Kabelkanälen und Energiesäulen**
Device for aligning cable ducts and energy columns
Dispositif d'alignement de conduites de câbles et de colonnes d'énergie

(30) Priorität: 30.11.2005 DE 202005018675 U
(43) Veröffentlichungstag der Anmeldung: 06.06.2007
(73) Patentinhaber: Tehalit GmbH, 67716 Heltersberg (DE)
(72) Erfinder: Stamer, Gernot, 66879 Kottweiler-Schwanden (DE); Schwarz, Jürgen, 67705 Trippstadt (DE)
(74) Vertreter: Patentanwälte Bitterich, Dr. Keller, Schwertfeger

(56) Entgegenhaltungen:
- DE-U1- 8 210 917
- DE-U1- 20 111 462
- US-A- 5 507 098

## Beschreibung

Die Erfindung betrifft Vorrichtungen zum Ausrichten von Kabelkanälen, Energiesäulen und dergleichen mit Halteleisten und/oder Haltenuten in der Horizontalen und in der Vertikalen.

Bei der Montage von Kabelkanälen, Energiesäulen und sonstigen Elektroinstallationsmaterialen verwendet der Installateur eine Wasserwaage, um eine exakt horizontale, vertikale oder auch winkelige Ausrichtung zu erreichen. Dazu legt oder stellt er seine Wasserwaage an das Installationsmaterial an, richtet dies aus, legt die Wasserwaage wieder weg und setzt seine Montage fort. Dabei passiert es jedoch immer wieder, dass das Installationsmaterial verrutscht. Der Installateur muss das Ausrichten von neuem beginnen. Das ist unbefriedigend.

Aus der DE 82 10 917 ist zwar ein Richtgerät zum Setzen von Aufnahmedosen für elektrische Installationsgeräte bekannt, das kreuzförmig angeordnete, in die auszurichtende Aufnahmedose greifende Haltefinger aufweist. Diese Vorrichtung ist allerdings für die Ausrichtung von längsgerichteten Kabelkanälen, Energiesäulen und dergleichen nicht geeignet, weil eine unbedingt notwendige stabile Lageorientierung dieser Vorrichtung zum auszurichtenden Gegenstand durch das Fehlen einer Messsohle, d. h. einer aufliegenden Bezugsfläche, nicht gegeben ist,

In der US 5,507,098 wird ebenfalls ein Richtgerät für Aufnahmedosen beschrieben. Das Richtgerät wird allein durch zwei Greifer, von welchen ein Greifer gegen eine klemmkraftaufbringende Feder verschiebbar ist, gegen die Innenkantenflächen der Aufnahmedose gespannt. Auch hier ist die Lageorientierung allein durch die Klemmbefestigung über die zwei Greifer vorgegeben. Das Richtgerät weist keine weitere an dem auszurichtenden Objekt anliegende Fläche auf, die als sogenannte Messsohle dient. Somit ist dieses Richtgerät genauso ungeeignet für das Ausrichten von Kabelkanälen und Energiesäulen.

Der vorliegenden Erfindung liegt die Aufgabe zugrunde, eine Vorrichtung anzugeben, die dem Monteur das Ausrichten von Kabelkanälen, Energiesäulen und dergleichen Installationsmaterial erheblich vereinfacht.

Diese Aufgabe wird gelöst durch eine Vorrichtung mit Merkmal des Anspruchs 1.

Gegenstand der Erfindung ist eine Wasserwaage, die jedoch speziell an die Gegebenheiten von Kabelkanälen, Energiesäulen und dergleichen angepasst ist. Diese Kanäle und Säulen sind standardmäßig mit Haltenuten oder Halteleisten ausgerüstet, an denen üblicherweise Trennwände, Steckdosen, Lichtschalter und dergleichen befestigt werden. Die erfindungsgemäße Vorrichtung ist daher mit Haltefüßen ausgerüstet, die mit diesen Haltenuten bzw. Halteleisten kooperieren. Da wenigstens einer der Haltefüße federnd beweglich ist, kann die Wasserwaage bequem befestigt und ebenso bequem wieder abgenommen werden. Der bewegliche Haltefuß ist an einer beweglichen Klappe angeformt. Dies erleichtert die Handhabung beim Einsetzen und Wiederentnehmen der Wasserwaage.

Gemäß einer Weiterbildung der Erfindung ist die Libelle eine Dosenlibelle, die an einer Stirnwand des Grundkörpers montiert ist. Dosenlibellen haben den Vorzug, dass sie die Ausrichtung in zwei Ebenen gleichzeitig ermöglichen.

Für eine Ausrichtung in der Horizontalen ist die Libelle an einer Seitenwand befestigt.

Vorzugsweise ist die Klappe ein Ausschnitt aus der Seitenwand des Grundkörpers.

Es empfiehlt sich, die Klappe mittels eines Filmscharniers anzulenken.

Zur Federung des weiteren Haltefußes bzw. der Klappe ist bevorzugt eine Balkenfeder zu verwenden.

Gemäß einer bevorzugten Ausgestaltung ist die Messsohle durch eine Dreipunkt-Auflage gebildet. Dies ermöglicht in allen Fällen eine sichere Auflage.

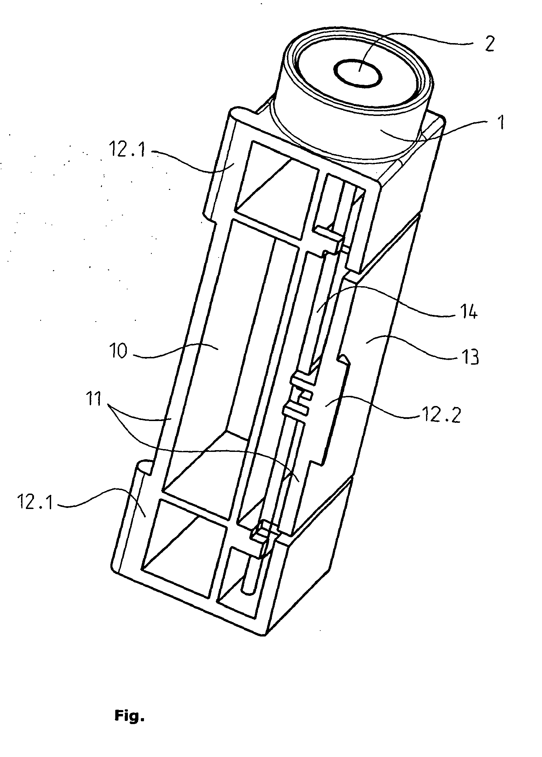

Anhand der einzigen Zeichnung soll die Erfindung in Form eines Ausführungsbeispiels näher erläutert werden.

Die Figur zeigt in isometrischer Darstellung eine Wasserwaage zum Ausrichten von Kabelkanälen, Energiesäulen und dergleichen Installationsmaterial in der Vertikalen. An der oberen Stirnseite eines Grundkörpers 10 ist eine Dosenlibelle 1,2 befestigt. Der Grundkörper 10 selbst ist als Spritz- oder Gussteil aus Kunststoff oder Metall hergestellt. Er besitzt eine Messsohle 11, die bevorzugt als Dreipunkt-Auflage realisiert wird.

Zur Ausrichtung der Kabelkanäle in der Horizontalen wird eine Wasserwaage verwendet, deren Libelle an einer Seitenwand befestigt ist.

An der einen Seitenwand des Grundkörpers 10 erkennt man im Bereich der Messsohle 11 zwei seitlich angeformte Haltefüße 12.1. An der gegenüberliegenden Seitenwand erkennt man einen weiteren Haltefuß 12.2. Dieser ist an einer Klappe 13 angeformt, die als Ausschnitt der Seitenwand ausgebildet und mittels eines Filmscharniers am Grundkörper 10 angelenkt ist.

Eine Balkenfeder 14, hier in Form eines Federdrahts, sorgt für die federnde Beweglichkeit der Klappe 13 bzw. des Haltefußes 12.2.

Die Haltefüße 12.1, 12.2 sind so dimensioniert und positioniert, dass sie mit den in Kabelkanälen und Energiesäulen serienmäßig vorhandenen Halteleisten bzw. Haltenuten kooperieren. Auf diese Weise kann die Wasserwaage an jeder beliebigen Stelle eines Kabelkanals oder einer Energiesäule montiert und nach Gebrauch auch wieder demontiert werden. In jedem Fall braucht der Installateur nicht mehr zu befürchten, dass die Wasserwaage beim Hantieren herunterfällt oder dass die Ausrichtung sich versehentlich verändert.

## Patentansprüche

1. Vorrichtung zum Ausrichten von Kabelkanälen, Energiesäulen und dergleichen mit Halteleisten und/oder Haltenuten in der Horizontalen und/oder Vertikalen, wobei
- ein Grundkörper (10) mit einer Messsohle (11) vorgesehen ist,
- an einer Seitenwand des Grundkörpers (10) wenigstens ein Haltefuß (12.1) vorgesehen ist,
- an der gegenüberliegenden Seitenwand wenigstens ein weiterer Haltefuß (12.2) federnd beweglich vorgesehen ist,
- an wenigstens einer Wand des Grundkörpers (10) eine Libelle (1) befestigt ist,
**gekennzeichnet durch** das Merkmal
- der weitere Haltefuß (12.2) ist an einer beweglichen Klappe (13) angeformt.

2. Vorrichtung nach Anspruch 1, **gekennzeichnet durch** die Merkmale
- die Libelle ist eine Dosenlibelle (1, 2),
- die Dosenlibelle (1, 2) ist an einer Stirnwand des Grundkörpers (10) montiert.

3. Vorrichtung nach Anspruch 1, **gekennzeichnet durch** das Merkmal
- die Libelle ist an einer Seitenwand des Grundkörpers (10) montiert.

4. Vorrichtung nach Anspruch 1, 2 oder 3, **gekennzeichnet durch** das Merkmal
- die Klappe (13) ist ein Ausschnitt aus der Seitenwand des Grundkörpers (10).

5. Vorrichtung nach Ansprüchen 1 bis 4, **gekennzeichnet durch** das Merkmal
- die Klappe (13) ist über ein Filmscharnier angelenkt.

6. Vorrichtung nach Ansprüchen 1 bis 5, **gekennzeichnet durch** das Merkmal
- der weitere Haltefuß (12.2) ist mittels einer Balkenfeder (14) gefedert.

7. Vorrichtung nach Ansprüchen 1 bis 6, **gekennzeichnet durch** das Merkmal
- die Messsohle (11) ist **durch** eine Dreipunkt-Auflage gebildet.

8. Vorrichtung nach Ansprüchen 1 bis 7, **gekennzeichnet durch** das Merkmal
- der Grundkörper (10) ist aus Kunststoff gespritzt.

9. Vorrichtung nach Ansprüchen 1 bis 7, **gekennzeichnet durch** das Merkmal
- der Grundkörper (10) ist aus Metall hergestellt.

## Claims

1. A device for aligning cable conduits, power columns and the like, with retaining strips and/or retaining grooves in the horizontal and/or vertical, wherein
- a base member (10) is provided with a measuring base (11),
- at least one retaining foot (12.1) is provided on a side wall of the base member (10),
- at least one further retaining foot (12.2) is provided resiliently movable on the opposite side wall,
- a spirit level (1) is mounted on at least one wall of the base member (10),
**characterised by** the feature
- the further retaining foot (12.2) is formed on a movable flap (13).

2. A device according to Claim 1, **characterised by** the features
- the spirit level is a level indicator (1,2),
- the level indicator (1) is mounted on an end wall of the base member (10).

3. A device according to Claim 1, **characterised by** the feature
- the spirit level is mounted on a side wall of the base member (10).

4. A device according to Claim 1,2 or 3, **characterised by** the feature
- the flap (13) is a cut-out from the side wall of the base member (10).

5. A device according to any one of Claims 1 to 4, **characterised by** the feature
- the flap (13) is articulated via a film hinge.

6. A device according to any one of Claims 1 to 5, **characterised by** the feature
- the further retaining foot (12.2) is spring-mounted by means of a bar spring (14).

7. A device according to any one of Claims 1 to 6, **characterised by** the feature
- the measuring base (11) is formed by a three-point support.

8. A device according to any one of Claims 1 to 7, **characterised by** the feature
- the base member (10) is injection-moulded from plastics material.

9. A device according to any one of Claims 1 to 7, **characterised by** the feature
- the base member (10) is made of metal.

## Revendications

1. Dispositif pour aligner à l'horizontale et/ou à la verticale des caniveaux de câbles, des colonnes de transport d'énergie et analogues pourvus de barrettes de maintien et/ou de rainures de maintien, sachant
- qu'il est prévu un corps de base (10) doté d'une semelle de mesure (11),
- qu'au moins un pied de maintien (12.1) est prévu sur une paroi latérale du corps de base (10),
- qu'au moins un autre pied de maintien (12.2) est prévu élastiquement mobile sur la paroi latérale opposée,
- qu'un niveau à bulle (1) est fixé sur au moins une paroi du corps de base (10), **caractérisé par** la caractéristique suivante :
- l'autre pied de maintien (12.2) est formé sur un volet mobile (13).

2. Dispositif selon la revendication 1, **caractérisé par** les caractéristiques suivantes :
- le niveau à bulle est un niveau à bulle sphérique (1, 2),
- le niveau à bulle sphérique (1, 2) est monté sur une paroi frontale du corps de base (10).

3. Dispositif selon la revendication 1, **caractérisé par** la caractéristique suivante :
- le niveau à bulle est monté sur une paroi latérale du corps de base (10).

4. Dispositif selon la revendication 1, 2 ou 3, **caractérisé par** la caractéristique suivante :
- le volet (13) est une découpe dans la paroi latérale du corps de base (10).

5. Dispositif selon les revendications 1 à 4, **caractérisé par** la caractéristique suivante :
- le volet (13) est articulé au moyen d'une charnière pelliculaire.

6. Dispositif selon les revendications 1 à 5, **caractérisé par** la caractéristique suivante :
- l'autre pied de maintien (12.2) est élastiquement mobile au moyen d'un ressort (14) en forme de barre.

7. Dispositif selon les revendications 1 à 6, **caractérisé par** la caractéristique suivante :
- la semelle de mesure (11) est formée par un appui en trois points.

8. Dispositif selon les revendications 1 à 7, **caractérisé par** la caractéristique suivante :
- le corps de base (10) est moulé par injection de matière plastique.

9. Dispositif selon les revendications 1 à 7, **caractérisé par** la caractéristique suivante :
- le corps de base (10) est fabriqué en métal.
